# EUROPEAN PATENT APPLICATION

(11) **EP 2 230 122 A1**
(43) Date of publication of application: **22.09.2010**
(21) Application number: 10156768.3
(22) Date of filing: 17.03.2010
(51) Int. Cl.: B60L 8/00, B60K 16/00

(54) **Trailer**

(30) Priority: 17.03.2009 BE 200900168
(71) Applicant: Segers, Johan, 3550 Heusden-Zolder (BE)
(72) Inventor: Segers, Johan, 3550 Heusden-Zolder (BE)
(74) Representative: Quintelier, Claude

(57) **Abstract**

Trailer provided to be attached releasably to a vehicle with electric drive, the trailer comprising at least one battery (4), a set of solar cells (3) for supplying energy to said at least one battery (4), means for supplying energy from said at least one battery (4) to said drive, said trailer furthermore comprising at least one wind generator (2) provided to convert wind energy into electrical energy and supply said energy to said at least one battery (4). Said wind generator (2) can be tilted (6) or moved (5) between a working position and a rest position.

## Description

The invention concerns a trailer provided to be attached releasably to a vehicle with electric drive, the trailer comprising at least one battery, one set of solar cells to supply energy to said at least one battery, means to supply energy from said at least one battery to said vehicle.

Such a trailer is known from DE4028937.

Such a trailer has the disadvantage that it cannot generate sufficient energy to provide a vehicle with energy to drive the vehicle. The solar cells in themselves cannot supply sufficient energy so the vehicle remains dependent on the energy supply from the electricity network.

The object of the invention is to provide a trailer which can supply more energy than the known trailers.

For this the trailer according to the invention has the feature that said trailer furthermore contains at least one wind generator to convert wind energy into electrical energy and supply the latter to said at least one battery.

Because the trailer according to the invention does not only produce solar energy but also extracts energy from the wind, the energy production is considerably higher. This has the consequence that the trailer according to the invention can supply sufficient energy to an electric vehicle to provide for the drive. The trailer supplies more energy than trailers from the prior art and supplies sufficient energy to be able to operate independent of secondary energy from the electricity network.

Preferably said wind generator can be tilted or moved between a working position, in which the wind generator is provided to catch wind, and a rest position. Because during driving the wind generator creates more air resistance than it can produce electrical energy, it is then moved into its rest position.

Preferably the trailer coupled to said vehicle is provided to supply said electrical drive of this vehicle with all the required electric energy. As a result the action radius of said vehicle is increased and said vehicle directly has access to the energy stored in the battery of the trailer. Said vehicle is consequently no longer dependent on the charge times of its batteries.

The invention will now be described in more detail with reference to the embodiment example shown in the drawing.

The drawing shows :

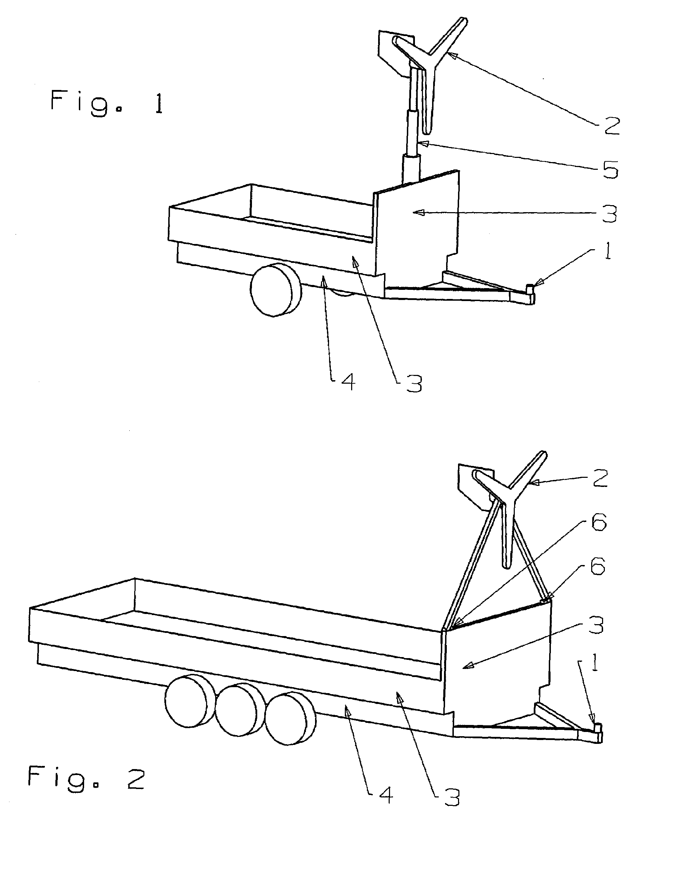

Figure 1 an energy trailer according to the invention, and
Figure 2 a further energy trailer according to the invention.

In the drawing the same or similar elements have the same reference numerals.

It will be clear that these drawings are merely illustrations of possible embodiments of trailers. Namely the surfaces covered with solar cells can be optimised further. The focus can lie on the use of solar cells, whereby normal use of the trailer will scarcely be possible, or the focus can lie on the use of the trailer, wherein the location of the solar cells on the trailer and hence the energy yield is of secondary importance.

The trailer is fitted with a coupling device 1 which makes it possible to couple the trailer both mechanically and electrically to a driving vehicle. The electric coupling 1 is preferably largely similar to the conventional electrical coupling 1, whereby the lights on the trailer can be controlled to comply with legislation in relation to lighting. Furthermore the trailer has a frame which is placed on wheels.

The trailer is provided to generate energy by means of a wind generator 2 and solar cells 3. The wind generator 2 can preferably be moved 5 and hinged 6 between a working position and a rest position. The working position is the position in which the wind generator 2 is exposed to the wind and in which consequently it can receive wind energy and convert this into electrical energy. The rest position is the position in which the wind generator 2 lies out of the wind. This position is preferably assumed during driving because the wind generator 2 would otherwise create more air resistance than it could generate electrical energy. The movement from the working position to the rest position and back can take place either under mechanical force or automatically as a result of the increasing drag encountered as the trailer begins to move.

Preferably the solar cells 3 are opened out during periods of stoppage so that their surface and hence their energy yield can be increased without this influencing the size of the trailer.

The trailer is furthermore fitted with at least one battery 4 to store the energy generated. The battery 4 can be incorporated under a loading floor of the trailer or in a separate compartment in the trailer.

This trailer can be coupled to a vehicle fitted with electric drive and associated batteries and thus supply energy for driving this vehicle. The vehicle can be a 100% electric vehicle or a vehicle with partly electric drive such as a hybrid electric vehicle.

The electric coupling 1 with the driving vehicle, which coupling is provided to supply energy to the drive of the vehicle, preferably takes place by means of a high power plug connection 1. This is a secondary plug connection 1 in addition to the conventional low power plug connection 1 which is already present on trailers to allow them to comply with legislation in regard to lighting. Because of the high electrical power which must be able to be transferred from the trailer to the driving vehicle, the conventional low power plug 1 cannot usually be used for this and a secondary high power plug 1 must be used. The use of such a high power plug connection 1 places the entire power of the batteries 4 of the trailer at the disposal of the driving vehicle. Coupling of the batteries 4 of the trailer to the batteries of the driving vehicle can then be implemented such that the batteries are not used simultaneously but successively. The last battery used, which is preferably that of the driving vehicle, can then be regarded as a back-up battery. The advantage of defining a back-up battery is that there is always one battery left when the first battery is drained. The advantage of having the battery of the driving vehicle as the back-up battery is that there is a direct benefit from towing the trailer, and also there is less dependence on this trailer when the first battery 4 is drained.

Another possibility of coupling the trailer electrically with the driving vehicle is to fit the trailer with a converter which converts the direct current voltage of the batteries into conventional network voltage. As a result the batteries of the electric vehicle can be charged by power from the trailer instead of from the electricity network. Electric vehicles are always equipped with a charging facility based on conventional network voltage. The batteries of the driving vehicle can then be charged both while driving and when stationary.

The energy transfer from the batteries 4 of the trailer to the drive of the driving vehicle can take place directly by means of a high power plug 1 or indirectly by means of a converter. On use of a converter, first the batteries of the driving vehicle are charged which then in turn supply their energy to the drive. The advantage of direct supply to the drive is that the full power of the trailer batteries is at the disposal of the drive. The disadvantage is that the electric vehicle must also be fitted with an extra high power plug. The advantage of indirect supply to the drive is that no adaptations must be made to the driving vehicle, namely this vehicle has a charging means for charging the batteries of the vehicle via the network voltage. The disadvantage is than a converter must be used and that consequently the energy transfer in many cases can only take place with limited capacity.

The electrical energy stored in the battery 4 is used to drive a vehicle, whereby the action radius of the vehicle is perceptibly increased. This has the result that such a vehicle with increased action radius is suitable for medium to long distance journeys.

A trailer according to the invention has the advantage that depending on the preferences, it can be chosen whether or not the trailer should be coupled to the vehicle. If the trailer is not coupled, the action radius is reduced. However this brings the advantage that the vehicle without trailer is easier to turn and park. If the trailer is coupled to the vehicle, the action radius will perceptibly increase while the parking difficulty will also increase. For long journeys out of town, it will therefore be more advantageous to take the trailer. For short journeys in town, it will be more advantageous to use the trailer only as a stationary charging station as described above.

Notwithstanding the fact that the trailer according to the invention can itself generate energy, it preferably has means for coupling to the electricity network. On over-production by the trailer, the energy can be supplied to the network, and on charging the batteries 4 of the trailer, the energy can be taken from the network to the trailer. The converter already present can also be used for this purpose. This converter can therefore be provided separate from the trailer. A secondary advantage of providing the converter on the trailer is that the trailer then can be coupled to the network anywhere. This connection with the electricity network can be realised in various ways known to the person skilled in the art.

## Claims

1. Trailer provided to be releasably connected to a vehicle with electric drive, the trailer comprising at least one battery (4), a set of solar cells (3) to supply energy to said at least one battery (4), means for supplying energy from said at least one battery (4) to said drive, **characterised in that** said trailer furthermore comprises at least one wind generator (2) to convert wind energy into electrical energy and supply said energy to said at least one battery (4).

2. Trailer according to claim 1, **characterised in that** the trailer is provided to generate energy when stationary with said set of solar cells (3) and said wind generator (2) and store said energy in said at least one battery (4).

3. Trailer according to claim 1 or 2, **characterised in that** the trailer coupled to said vehicle is provided to increase an action radius of said vehicle.

4. Trailer according to any of the preceding claims, **characterised in that** the trailer coupled to said vehicle is provided to supply said electric drive of said vehicle with all its required electrical energy.

5. Trailer according to any of the preceding claims, **characterised in that** said wind generator (2) can be moved between a working position, in which the wind generator (2) is provided to catch the wind, and a rest position.

6. Trailer according to any of the preceding claims, **characterised in that** said solar cells (3) are mounted so they can be unfolded.

7. Trailer according to any of the preceding claims, **characterised in that** the trailer comprises means for connecting said battery (4) with an electricity network.

8. Trailer according to any of the preceding claims, **characterised in that** it is furthermore designed to transfer the stored electrical energy to the driving vehicle when in a stationary state.
